# EUROPÄISCHE PATENTSCHRIFT

(11) **EP 3 442 834 B1**
(45) Veröffentlichungstag und Bekanntmachung des Hinweises auf die Patenterteilung: **01.04.2020**
(21) Anmeldenummer: 17727131.9
(22) Anmeldetag: 19.05.2017
(51) Int. Cl.: B60R 19/04, B61D 17/04

(54) **MEHRTEILIGE SCHÜRZE FÜR EIN FAHRZEUG**
VEHICLE SKIRT CONSISTING OF SEVERAL SECTIONS
TABLIER EXTERNES À PLUSIEURS SECTIONS POUR VÉHICULES

(30) Priorität: 14.06.2016 DE 102016210514
(43) Veröffentlichungstag der Anmeldung: 20.02.2019
(73) Patentinhaber: Siemens Mobility GmbH, 81739 München (DE)
(72) Erfinder: BUCHMANN, Lars, 91052 Erlangen (DE); JOLAS, Dirk, 90455 Nürnberg (DE); KUCZMIK, Michael, 91052 Erlangen (DE); LEIKER, Fritz, 91052 Erlangen (DE); RUBINCHIK, Konstantin, 90449 Nürnberg (DE); SCHÖNWEISS, Linda, 91054 Erlangen (DE)
(86) Internationale Anmeldenummer: PCT/EP2017/062099
(87) Internationale Veröffentlichungsnummer: WO 2017/215883

(56) Entgegenhaltungen:
- WO-A1-2009/112095
- WO-A1-2012/099020
- US-A- 4 333 674
- US-A1- 2006 249 961

## Beschreibung

Die vorliegende Erfindung betrifft eine mehrteilige Schürze für ein Fahrzeug, mit wenigstens einer ersten und einer zweiten Teilschürze, die mithilfe mindestens eines Verbindungselementes wiederholt lösbar und aneinander befestigbar miteinander verbunden sind.

Schürzen und beispielsweise Front- oder Heckschürzen für ein Fahrzeug sind allgemein bekannt. Wird die Schürze beispielsweise bei einem Unfall beschädigt, so ist diese bei vielen modernen Fahrzeugen komplett auszutauschen, da bekannte Schürzen, insbesondere wenn sie aus Kunststoff gefertigt sind, bei unfallbedingter Beschädigung schnell brechen und nicht ohne Weiteres instandgesetzt werden können. Beispielsweise bei Straßenbahnen, aber auch bei anderen Fahrzeugen, kann es jedoch vorkommen, dass Beschädigungen an der Schürze eher kleinflächig oder gehäuft an bestimmten Bereichen der Schürze ausfallen. Trotz einer solchen eher lokal begrenzten Beschädigung ist die gesamte Schürze auszutauschen, was aus finanziellen und umwelttechnischen Gesichtspunkten nachteilig ist.

Die Druckschrift WO 2009/112095 A1 zeigt ein Schienenfahrzeug mit mehreren Bugschürzen. Die Druckschrift DE 195 46 478 A1 offenbart nun eine mehrteilige Stoßfängerverkleidung für Kraftfahrzeuge, deren Einzelteile über Verbindungsplatte lösbar verbindbar sind. Die Druckschrift DE 29 27 036 A1 lehrt einen Stoßfänger für Kraftwagen, mit einem Profiltragteil und einem auswechselbaren Energieabsorptionsglied.

Die Druckschrift WO 2012/099020 A1 lehrt nun eine zweiteilige Frontverkleidung eines Kraftfahrzeugs, die mithilfe eines Verbindungselements miteinander verbunden sind, wobei ein Verkleidungsteil eine strukturelle Schwächung aufweist, um eine Biegesteifigkeit des Verkleidungsteils abzusenken und somit eine Verformung des Verkleidungsteils unter Last zu ermöglichen.

Die der Erfindung zugrunde liegende Aufgabe besteht also darin, eine Schürze für ein Fahrzeug bereitzustellen, die eine einfache Reparatur eines Schadens an der Schürze ermöglicht.

Erfindungsgemäß wird eine mehrteilige Schürze für ein Fahrzeug bereitgestellt, wobei die Schürze wenigstens eine erste und eine zweite Teilschürze aufweist. Die Teilschürzen sind mithilfe mindestens eines Verbindungselementes wiederholt lösbar und aneinander befestigbar miteinander verbunden. Die erste Teilschürze weist zumindest eine als strukturelle Schwächung ausgebildete Sollbruchstelle auf, die ausgebildet ist, bei mechanischer Belastung früher zu brechen, als das Verbindungselement und/oder als die zweite Teilschürze. Ferner wird erfindungsgemäß eine Teilschürze für eine Schürze für ein Fahrzeug bereitgestellt, wobei zumindest eine als strukturelle Schwächung ausgebildete Sollbruchstelle aufweist. Die Schürze weist darüber hinaus eine dritte Teilschürze auf, wobei die zweite Teilschürze zwischen der ersten Teilschürze und der dritten Teilschürze angeordnet ist. Die erste und die dritte Teilschürze können also als Seitenteile der Schürze angesehen werden. Die zweite Teilschürze ist an der ersten und an der dritten Teilschürze mithilfe jeweils mindestens eines Verbindungselementes wiederholt lösbar und wieder verbindbar befestigt. Auch die dritte Teilschürze weist zumindest eine als strukturelle Schwächung ausgebildete Sollbruchstelle auf, die ausgebildet ist, bei mechanischer Belastung früher zu brechen, als das die zweite Teilschürze an der dritten Teilschürze befestigende Verbindungselement und/oder als die zweite Teilschürze. Insbesondere bei Unfällen, bei denen ein Fahrzeug seitlich gegen die Schürze prallt, braucht nur die beschädigte Teilschürze ausgetauscht zu werden. Die zentrale, zweite Teilschürze braucht in diesem Fall nicht gewechselt zu werden.

Die erfindungsgemäße Ausgestaltung der Schürze mit mehreren Teilschürzen, die über das Verbindungselement aneinander befestigbar sind, und mit der Sollbruchstelle, hat den Vorteil, dass nur die, beispielsweise bei einem Unfall, belastete und die Sollbruchstelle aufweisende Teilschürze beschädigt wird. Die Sollbruchstelle bricht, bevor die bei der Beschädigung der ersten Teilschürze auftretende Last auch die zweite Teilschürze beschädigt. Aufgrund des lösbaren Verbindungselementes kann die beschädigte Teilschürze einfach gegen eine unbeschädigte und womöglich neue Teilschürze ausgetauscht werden.

Die erfindungsgemäße Lösung kann durch verschiedene, jeweils für sich vorteilhafte und, sofern nicht anders ausgeführt, beliebig kombinierbare Ausgestaltungen weiter verbessert werden. Auf dieser Ausgestaltungsformen und die mit ihnen verbundenen Vorteile ist im Folgenden eingegangen.

So kann die Sollbruchstelle als eine Materialschwächung, beispielsweise ein verdünnter oder ein hohler Materialquerschnitt, bereitgestellt sein. Materialschwächungen können zielgenau dort vorgesehen sein, wo die erste Teilschürze bei mechanischer Überlastung brechen soll. Ferner können Materialschwächungen einfach nicht destruktiv und beispielsweise visuell oder mithilfe von Ultraschall kontrolliert werden.

Die erste Teilschürze kann mit einer die Sollbruchstelle aufweisenden Verstärkungsrippe ausgeformt sein. Weist die erste Teilschürze mehrere Verstärkungsrippen auf, so können ausgewählte der mehreren Verstärkungsrippen entlang einer Kurve oder einer Linie angeordnete Sollbruchstellen und beispielsweise Materialschwächungen aufweisen, sodass die erste Teilschürze bei einer mechanischen Überlastung entlang dieser Kurve oder Linie bricht.

Zumindest die erste Teilschürze kann durch ein additives Verfahren hergestellt sein. Ein additives Herstellverfahren kann auch als generative Fertigung bezeichnet sein. Zum Beispiel kann die erste Teilschürze aus Glasfaserlaminat gefertigt sein. Beispielsweise kann zumindest die erste Teilschürze durch 3D-Druck oder durch Verkleben von Kompositmatten hergestellt sein. Hierdurch können einfach und ohne teure Werkzeuge herstellen zu müssen, verschieden ausgeformte Teilschürzen hergestellt werden. Ferner kann bei einem additiven Fertigungsverfahren einfach der die Sollbruchstelle bereitstellende hohle Materialquerschnitt hergestellt werden.

Die Sollbruchstelle der dritten Teilschürze kann als eine Materialschwächung, beispielsweise ein verdünnter oder ein hohler Materialquerschnitt, bereitgestellt sein. Materialschwächungen können zielgenau dort vorgesehen sein, wo die dritte Teilschürze bei mechanischer Überlastung brechen soll. Ferner können Materialschwächungen einfach nicht destruktiv und beispielsweise visuell oder mithilfe von Ultraschall kontrolliert werden.

Die dritte Teilschürze kann mit einer die Sollbruchstelle aufweisenden Verstärkungsrippe ausgeformt sein. Weist die dritte Teilschürze mehrere Verstärkungsrippen auf, so können ausgewählte der mehreren Verstärkungsrippen entlang einer Kurve oder einer Linie angeordnete Sollbruchstellen und beispielsweise Materialschwächungen aufweisen, sodass die dritte Teilschürze bei einer mechanischen Überlastung entlang dieser Kurve oder Linie bricht.

Die dritte Teilschürze kann durch ein additives Verfahren hergestellt sein, wobei ein derartiges Herstellverfahren für die dritte Teilschürze dieselben Vorteile aufweisen kann wie für die erste Teilschürze. Beispielsweise kann die dritte Teilschürze aus Glasfaserlaminat gefertigt sein.

Das Verbindungselement kann beispielsweise eine Schraube mit oder ohne Konterschraube beziehungsweise Kontermutter sein. Alternativ kann das Verbindungselement ein Niet sein, der zum Lösen der Verbindungen zerstört werden muss.

Die innere zweite Teilschürze kann ohne eine Sollbruchstelle ausgebildet sein, sodass nur die erste Teilschürze oder die erste und die dritte Teilschürze jeweils wenigstens eine Sollbruchstelle aufweisen.

Das Fahrzeug kann ein beliebiges Land-, Wasser- oder Luftfahrzeug sein. Insbesondere kann das Fahrzeug ein Kraftfahrzeug sein. Beispielsweise kann das Fahrzeug ein Automobil oder ein Zug, zum Beispiel eine Straßenbahn, sein.

Die Schürze kann als Karosseriebauteil bezeichnet sein. Insbesondere kann die Schürze eine dreiteilige Schürze mit den ersten, zweiten und dritten Teilschürzen sein.

Zumindest die die Sollbruchstelle aufweisende Teilschürze kann als ein Austauschteil separat bereitgestellt sein.

Ferner umfasst die Erfindung ein Kraftfahrzeug, welches eine erfindungsgemäße mehrteilige Schürze als Front- und/oder Heckschürze aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Zusammenhang mit den Zeichnungen näher erläutert werden. Es zeigen:
- Figur 1: eine schematische Frontansicht eines Ausführungsbeispiels der erfindungsgemäßen Schürze,
- Figur 2: eine schematische Rückansicht des Ausführungsbeispiels der Figur 1,
- Figur 3: ein Abschnitt des Ausführungsbeispiels der Figuren 1 und 2 in Frontansicht und
- Figur 4: eine geschnittene Ansicht des bisherigen Ausführungsbeispiels.

Im Folgenden ist die Erfindung beispielhaft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

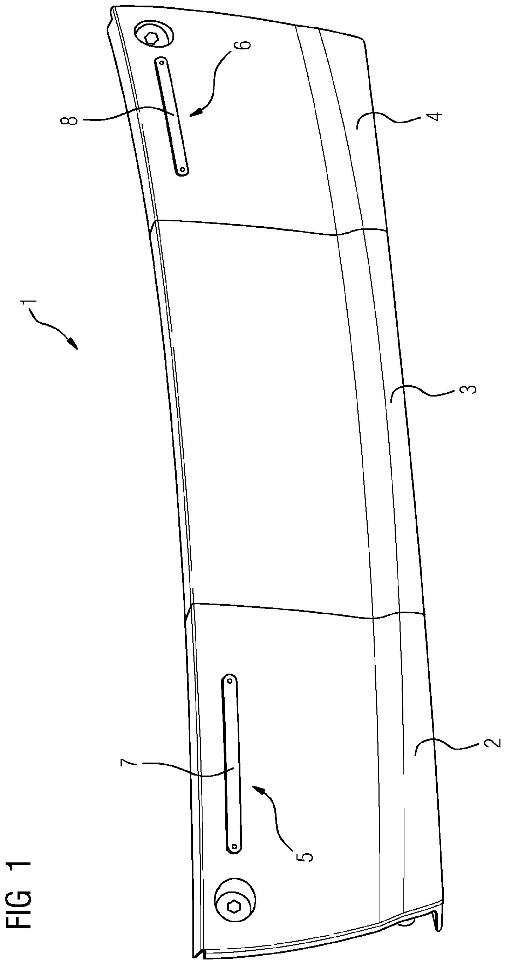

In der Figur 1 ist als mehrteilige Schürze beispielhaft eine dreiteilige Schürze 1 für ein Fahrzeug in einer Frontalansicht gezeigt. Im montierten Zustand der Schürze 1 weist deren in der Figur sichtbare Seite in Fahrtrichtung des Fahrzeuges. Die Schürze 1 weist eine erste Teilschürze 2, eine zweite Teilschürze 3 und eine dritten Teilschürze 4 auf. Die zweite Teilschürze 3 ist zwischen der ersten Teilschürze 2 und der dritten Teilschürze 4 dargestellt und jeweils an diesen befestigt. Die zweite Teilschürze 3 kann als mittlere Teilschürze und die erste Teilschürze 2 sowie die dritte Teilschürze 4 jeweils als äußere Teilschürze bezeichnet werden.

Die erste Teilschürze 2 und/oder die dritte Teilschürze 4 können jeweils zumindest eine Aufnahme 5, 6 aufweisen, wobei sich die Aufnahmen 5, 6 zumindest teilweise in Fahrtrichtung des Fahrzeuges öffnen können. Die Aufnahmen 5, 6 können ausgestaltet sein, um beispielsweise Tagfahrlichter 7, 8 oder andere Elemente, etwa Blinker, wenigstens abschnittsweise aufzunehmen.

Im zusammengebauten Zustand kann die Schürze 1 mit oder ohne Tagfahrlicht 7, 8 einstückig handhabbar sein, wodurch sich die Montage der Schürze 1 am Fahrzeug leichter gestaltet.

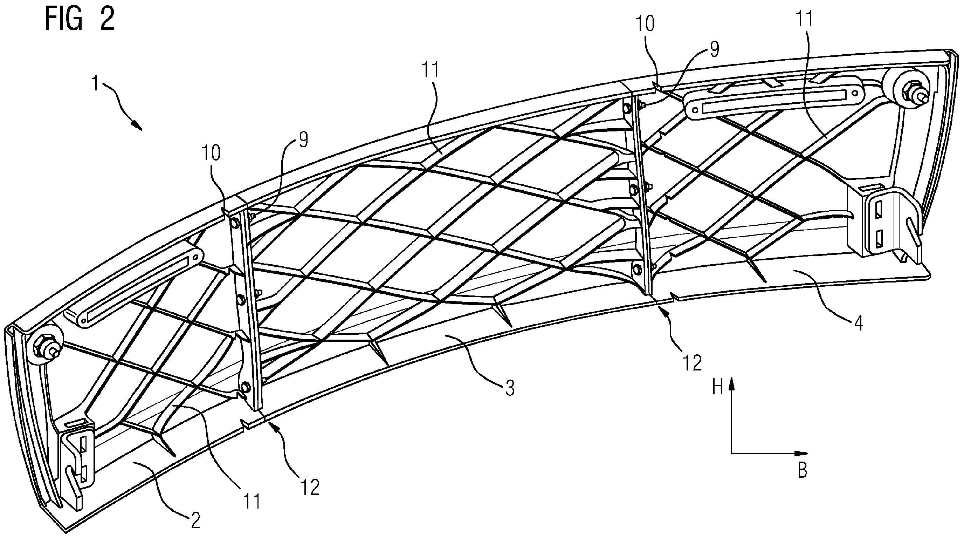

Figur 2 zeigt das Ausführungsbeispiel der Figur 1 in einer Rückansicht, wobei die dargestellte sichtbare Seite der Schürze 1 im am Fahrzeug montierten Zustand der Schürze 1 ins Innere des Fahrzeuges weisen kann. Die erste und die dritte Teilschürze 2, 4 sind jeweils durch zumindest ein Verbindungselement 9 an der zweiten Teilschürze 3 fest, jedoch lösbar, angebracht.

Zumindest eine der Teilschürzen 2, 3, 4 und beispielsweise die erste Teilschürze 2 und/oder die dritte Teilschürze 4 können eine als strukturelle Schwächung ausgebildete Sollbruchstelle 10 aufweisen. Stößt nun ein Objekt, zum Beispiel ein anderes Fahrzeug, gegen die mit der Sollbruchstelle 10 ausgebildete Teilschürze 2, 3, 4, so zerbricht diese Teilschürze 2, 3, 4 an der Sollbruchstelle 10, bevor die benachbarte Teilschürze 2, 3, 4 beschädigt werden kann. Hierzu kann die Sollbruchstelle 10 ausgebildet sein, bei mechanischer Belastung früher zu brechen, als das Verbindungselement 9 und/oder die benachbarte Teilschürze 2, 3, 4.

Die Sollbruchstelle 10 kann als eine Materialschwächung bereitgestellt sein. Im Ausführungsbeispiel der Figur 2 weisen die erste Teilschürze 2 und die dritte Teilschürze 4 zur Ausbildung der Sollbruchstelle verdünnte und insbesondere geschlitzte Abschnitte auf, wobei die Materialschwächungen des Ausführungsbeispiels der Figur 2 in einer Höhenrichtung H der Schürze 1 miteinander fluchten. Quer zur Höhenrichtung H verläuft eine Breitenrichtung B der Schürze 1. Entlang der Breitenrichtung B sind die Teilschürzen 2, 3, 4 hintereinander angeordnet. Die in der Figur 2 beispielshaft durch Schlitze bereitgestellte Sollbruchstelle 10 öffnen sich insbesondere weg von der Front der Schürze 1, im montierten Zustand also entgegen der Fahrtrichtung des Fahrzeuges, wenn die Schürze eine Frontschürze ist. Ist die Schürze 1 eine Heckschürze, so können sich die Schlitze auch in Fahrtrichtung, also ebenfalls ins Innere Fahrzeuges öffnen.

Alternativ zum dargestellten verdünnten Materialquerschnitt kann der Materialquerschnitt der jeweiligen Teilschürze 2, 3, 4 auch als ein hohler Materialquerschnitt bereitgestellt sein. Da ein hohler Materialquerschnitt in der Ansicht der Figur 2 jedoch nicht sichtbar wäre, ist auf eine Darstellung dieses Ausführungsbeispiels verzichtet.

Um zu gewährleisten, dass sowohl die Schürze 1 als auch zumindest eine der Teilschürzen 2, 3, 4 für die Montage und den Betrieb eine ausreichende Steifigkeit aufweisen und um mechanische Kräfte effizient zur Sollbruchstelle 10 leiten zu können, kann zumindest die die Sollbruchstelle 10 aufweisende Teilschürze 2, 3, 4, beispielsweise die erste Teilschürze 2 und/oder die dritte Teilschürze 4, zumindest eine Verstärkungsrippe 11 aufweisen. Auch die zweite Teilschürze 3 kann zumindest eine Verstärkungsrippe 11 aufweisen. Die Sollbruchstelle 10 kann durch die wenigstens eine Verstärkungsrippe 11 der jeweiligen Teilschürze 2, 4 verlaufen.

Vorzugsweise ist die Sollbruchstelle 10 in der Nähe zu einem Kontaktbereich 12, in dem die erste Teilschürze 2 oder die dritte Teilschürze 4 die zweite Teilschürze 3 kontaktiert, ausgebildet. Beispielsweise weist die Sollbruchstelle 10 einen Abstand von bis zu 50 mm, bis zu 40 mm, bis zu 30 mm, bis zu 20 mm oder bis zu 10 mm zum Kontaktbereich 12 auf. Hierdurch ist gewährleistet, dass auch eine in der Nähe des Verbindungselementes 9 auftretende mechanische Last durch die Sollbruchstelle 10 daran gehindert wird, die zweite Teilschürze 3 zu beschädigen.

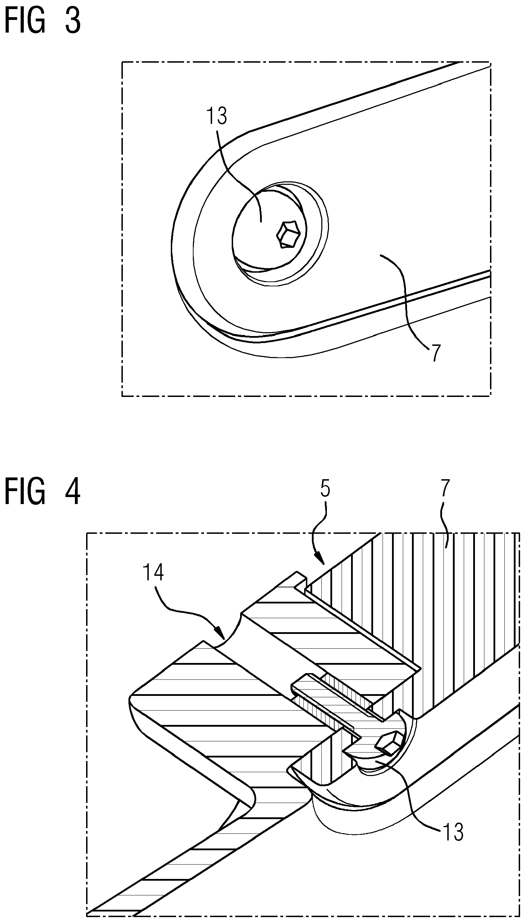

Figur 3 zeigt einen vergrößerten Abschnitt der Schürze 1 des Ausführungsbeispiels der Figuren 1 und 2 und insbesondere der Frontansicht der Figur 1 mit dem Tagfahrlicht 7. Zur Befestigung des Tagfahrlichtes 7 ist ein Befestigungselement 13, zum Beispiel eine Schraube, vorgesehen.

Figur 4 zeigt die vergrößerte Ansicht der Figur 3 in einer Schnittdarstellung, wobei die Schnittebene entlang der Breitenrichtung B und quer zur Höhenrichtung H verläuft.

Das Befestigungselement 13 ist in einer durch die Schürze 1 bereitgestellte Befestigungsaufnahme 14 angeordnet und in dieser an der Schürze 1 befestigt. Die Befestigungsaufnahme 14 ist benachbart zur Aufnahme 5, jedoch separat von der Aufnahme 5, vorgesehen. Nicht beschädigte Tagfahrlichter 7 können also einfach gewechselt werden, wenn die Teilschürze 2, 4 auszutauschen ist. Dies trifft auch auf das Tagfahrlicht 8 zu, wenn die dritte Teilschürze 4 mit der Befestigungsaufnahme 14 ausgebildet ist. Die Befestigungsaufnahme 14 kann sich parallel zur Fahrtrichtung erstrecken und als eine durchgehende oder geschlossene Öffnung bereitgestellt sein.

## Patentansprüche

1. Mehrteilige Schürze (1) für ein Fahrzeug, mit wenigstens einer ersten und einer zweiten Teilschürze (2, 3), die mithilfe mindestens eines Verbindungselementes (9) wiederholt lösbar und aneinander befestigbar miteinander verbunden sind, wobei die erste Teilschürze (2) zumindest eine als strukturelle Schwächung ausgebildete Sollbruchstelle (10) aufweist, die ausgebildet ist, bei mechanischer Belastung früher zu brechen, als das Verbindungselement (9) und/oder als die zweite Teilschürze (3), wobei die Schürze (1) eine dritte Teilschürze (4) aufweist, wobei die zweite Teilschürze (3) zwischen der ersten Teilschürze (2) und der dritten Teilschürze (4) angeordnet und an diesen Teilschürzen (2, 4) mithilfe jeweils mindestens eines Verbindungselementes (9) wiederholt lösbar und wieder verbindbar befestigt ist und wobei auch die dritte Teilschürze (4) zumindest eine als strukturelle Schwächung ausgebildete Sollbruchstelle (10) aufweist, die ausgebildet ist, bei mechanischer Belastung früher zu brechen, als das die zweite Teilschürze (3) an der dritten Teilschürze (4) befestigende Verbindungselement (9) und/oder als die zweite Teilschürze (3).

2. Mehrteilige Schürze (1) nach Anspruch 1, **dadurch gekennzeichnet, dass** die Sollbruchstelle (10) als eine Materialschwächung bereitgestellt ist.

3. Mehrteilige Schürze (1) nach Anspruch 2, **dadurch gekennzeichnet, dass** die Materialschwächung als ein verdünnter oder hohler Materialquerschnitt ausgebildet ist.

4. Mehrteilige Schürze (1) nach einem der Ansprüche 1 bis 3, **dadurch gekennzeichnet, dass** die erste Teilschürze (2) mit einer die Sollbruchstelle (10) aufweisenden Verstärkungsrippe (11) ausgeformt ist.

5. Mehrteilige Schürze (1) nach einem der Ansprüche 1 bis 4, **dadurch gekennzeichnet, dass** die erste Teilschürze (2) durch ein additives Verfahren hergestellt ist.

6. Mehrteilige Schürze (1) nach einem der Ansprüche 1 bis 5, **dadurch gekennzeichnet, dass** die dritte Teilschürze (4) durch ein additives Verfahren hergestellt ist.

7. Kraftfahrzeug umfassend eine mehrteilige Schürze (1) nach einem der Ansprüche 1 bis 6, wobei die mehrteilige Schürze (1) als eine Front- und/oder Heckschürze des Kraftfahrzeugs ausgebildet ist.

8. Kraftfahrzeug nach Anspruch 7, wobei das Kraftfahrzeug ein Schienenfahrzeug ist.

## Claims

1. Multipart apron (1) for a vehicle, with at least a first and a second partial apron (2, 3) which are connected together by means of at least one connecting element (9) so as to be able to be separated from and attached to each other repeatedly, wherein the first partial apron (2) has at least one predetermined breaking point (10) formed as a structural weakening, which is designed to break earlier than the connecting element (9) and/or the second partial apron (3) under mechanical load, wherein the apron (1) has a third partial apron (4), wherein the second partial apron (3) is arranged between the first partial apron (2) and the third partial apron (4), and is attached to these partial aprons (2, 4) by means of at least one respective connecting element (9) so as to be able to be separated and reconnected repeatedly, and wherein the third partial apron (4) also has at least one predetermined breaking point (10) formed as a structural weakening, which is designed to break earlier than the connecting element (9) attaching the second partial apron (3) to the third partial apron (4) and/or than the second partial apron (3) under mechanical load.

2. Multipart apron (1) according to Claim 1, **characterized in that** the predetermined breaking point (10) is provided as a material weakening.

3. Multipart apron (1) according to Claim 2, **characterized in that** the material weakening is formed as a thinned or hollow material cross-section.

4. Multipart apron (1) according to any of Claims 1 to 3, **characterized in that** the first partial apron (2) is formed with a reinforcing rib (11) comprising the predetermined breaking point (10).

5. Multipart apron (1) according to any of Claims 1 to 4, **characterized in that** the first partial apron (2) is formed by an additive process.

6. Multipart apron (1) according to any of Claims 1 to 5, **characterized in that** the third partial apron (4) is formed by an additive process.

7. Motor vehicle comprising a multipart apron (1) according to any of Claims 1 to 6, wherein the multipart apron (1) is formed as a front and/or rear apron of the motor vehicle.

8. Motor vehicle according to Claim 7, wherein the motor vehicle is a rail vehicle.

## Revendications

1. Tablier (1) en plusieurs parties d'un véhicule, comprenant au moins un premier et un deuxième tabliers (2, 3) partiels, qui, au moyen d'au moins un élément (9) de liaison, sont reliés entre eux en pouvant, de manière répétée, être détachés et fixés l'un à l'autre,
dans lequel le premier tablier (2) partiel a au moins un point (10) destiné à se rompre, qui est constitué sous la forme d'une faiblesse structurelle et qui est constitué pour se rompre sous une charge mécanique plus tôt que l'élément (9) de liaison et/ou le deuxième tablier (3) partiel, le tablier (1) ayant un troisième tablier (4) partiel, le deuxième tablier (3) partiel étant disposé entre le premier tablier (2) partiel et le troisième tablier (4) partiel et étant fixé de manière à pouvoir être détaché et relié à nouveau, de manière répétée, à ces tabliers (2, 4) partiels, à l'aide, respectivement, d'au moins un élément (9) de liaison, et dans lequel le troisième tablier (4) partiel aussi a au moins un point (10) destiné à se rompre, qui est constitué sous la forme d'une faiblesse structurelle et qui est constitué pour se rompre, sous une charge mécanique, plus tôt que le deuxième élément (9) de liaison, fixant le deuxième tablier (3) partiel au troisième tablier (4) partiel, et/ou que le deuxième tablier (3) partiel.

2. Tablier (1) en plusieurs parties suivant la revendication 1, **caractérisé en ce que** le point (10) destiné à se rompre est sous la forme d'une faiblesse de matériau.

3. Tablier (1) en plusieurs parties suivant la revendication 2, **caractérisé en ce que** la faiblesse de matériau est constituée sous la forme d'une section transversale de matériau amincie ou creuse.

4. Tablier (1) en plusieurs parties suivant l'une des revendications 1 à 3, **caractérisé en ce que** le premier tablier (2) partiel est formé en ayant une nervure (11) de renfort ayant le point (10) destiné à se rompre.

5. Tablier (1) en plusieurs parties suivant l'une des revendications 1 à 4, **caractérisé en ce que** le premier tablier (2) partiel est fabriqué par un procédé additif.

6. Tablier (1) en plusieurs parties suivant l'une des revendications 1 à 5, **caractérisé en ce que** le troisième tablier (4) partiel est fabriqué par un procédé additif.

7. Véhicule automobile comprenant un tablier (1) en plusieurs parties suivant l'une des revendications 1 à 6, le tablier (1) en plusieurs parties étant constitué sous la forme d'un tablier avant et/ou d'un tablier arrière du véhicule automobile.

8. Véhicule automobile suivant la revendication 7, dans lequel le véhicule automobile est un véhicule ferroviaire.
